# EUROPÄISCHE PATENTSCHRIFT

(11) **EP 2 885 603 B1**
(45) Veröffentlichungstag und Bekanntmachung des Hinweises auf die Patenterteilung: **08.06.2016**
(21) Anmeldenummer: 13753825.2
(22) Anmeldetag: 08.08.2013
(51) Int. Cl.: G06T 7/00, G01B 11/245

(54) **VERFAHREN ZUM MESSEN DER DURCHBIEGUNG EINES BRENNELEMENTKASTENS EINES BRENNELEMENTES EINES SIEDEWASSERREAKTORS**
METHOD FOR MEASURING THE DEFLECTION OF A FUEL ELEMENT CAN FOR A FUEL ELEMENT OF A BOILING WATER REACTOR
PROCÉDÉ DE MESURE DE LA FLEXION D'UNE GAINE D'UN ASSEMBLAGE COMBUSTIBLE DANS UN RÉACTEUR À EAU BOUILLANTE

(30) Priorität: 20.08.2012 DE 102012214730; 24.05.2013 DE 102013105365
(43) Veröffentlichungstag der Anmeldung: 24.06.2015
(73) Patentinhaber: AREVA GmbH, 91052 Erlangen (DE)
(72) Erfinder: HUMMEL, Wolfgang, 92318 Neumarkt (DE)
(74) Vertreter: Schlögl, Markus
(86) Internationale Anmeldenummer: PCT/EP2013/066603
(87) Internationale Veröffentlichungsnummer: WO 2014/029625

(56) Entgegenhaltungen:
- FR-A1- 2 754 892
- US-A1- 2011 182 393
- US-B1- 6 549 600

## Beschreibung

Die Erfindung bezieht sich auf ein Verfahren zum Messen der Durchbiegung eines Brennelementkastens eines Brennelementes eines Siedewasserreaktors.

Bei einem Brennelement eines Siedewasserreaktors sind die Brennstäbe innerhalb eines Brennelementkastens angeordnet. Die Brennelemente und dementsprechend die Brennelementkästen können im Laufe ihres Betriebes abhängig von ihrer Position im Kern eine Durchbiegung erfahren, die im ungünstigsten Fall zu einer Schwergängigkeit der Steuerelemente oder zu Problemen beim Brennelementwechsel führen können. Um beurteilen zu können, ob, wo und mit welcher Drehorientierung ein Brennelement oder ein Brennelementkasten im Kern weiter verwendet werden kann, ist es daher erforderlich, die Durchbiegung der Brennelementkästen zu bestimmen.

Der Erfindung liegt daher die Aufgabe zu Grunde, ein Verfahren zum Messen der Durchbiegung eines Brennelementkastens eines Brennelementes eines Siedewasserreaktors anzugeben, das einfach und mit geringem Zeitaufwand durchzuführen ist.

Die genannte Aufgabe wird gemäß der Erfindung gelöst mit einem Verfahren mit den Merkmalen des Patentanspruches 1. Bei dem Verfahren zum Messen der Durchbiegung eines Brennelementkastens eines Brennelementes eines Siedewasserreaktors wird mit einer Kamera ein Bild des Brennelementkastens aufgenommen und mit den folgenden Verfahrensschritten photogrammetrisch ausgewertet:
a) der Brennelementkasten wird in einem gefluteten Becken positioniert,
b) die Kamera wird derart oberhalb des Brennelementkastens und seitlich versetzt zum Brennelementkasten positioniert, dass
   b1) deren optische Achse unter einem spitzen Winkel zu einer idealen Mittellängsachse des Brennelementkastens, und dass
   b2) deren Bildebene parallel zu einer stirnseitigen Kante des Brennelementkastens orientiert ist, und dass
   b3) beide der Kamera zugewandten stirnseitigen Kanten des Brennelementkastens im Bild abgebildet sind,
c) in dem von der Kamera aufgenommenen Bild werden die Bildpositionen der Eckpunkte der parallel zur Bildebene orientierten, der Kamera zugewandten stirnseitigen Kanten gemessen,
d) aus der bekannten Länge und Breite des Brennelementkastens, den Bildpositionen der Eckpunkte der stirnseitigen Kanten und der bekannten Bildweite der Kamera wird entweder die Lage einer Schnittlinie im Bild berechnet, in der eine zur idealen Mittellängsachse senkrechte und hinsichtlich ihrer axialen Position vorgegebene Zwischenebene die der Kamera zugewandte Seitenfläche des Brennelementkastens schneidet, oder es wird aus der Lage einer vorgegebenen Schnittlinie im Bild die axiale Position dieser Schnittlinie berechnet,
e) die Schnittlinie wird in das Bild eingeblendet und es werden die Bildpositionen der auf dieser Schnittlinie liegenden Eckpunkte des Brennelementkastens gemessen,
f) aus den Bildpositionen der Eckpunkte wird die Bildposition des Mittelpunktes einer die Eckpunkte verbindenden, parallel zu den stirnseitigen Kanten verlaufenden Strecke ermittelt,
g) mit Hilfe der bekannten Breite des Brennelementkastens und des in dieser Schnittlinie bekannten Abbildungsmaßstabes der Kamera wird aus der gemessenen Bildposition dieses Mittelpunktes dessen Abweichung von der idealen Mittellängsachse berechnet.

Durch diese Vorgehensweise ist es möglich, den gesamten Brennelementkasten, dessen Länge (Abstand zweier an den stirnseitigen Enden einer Längskante befindlichen Eckpunkte) und Breite bekannt sind, durch die Aufnahme eines einzigen Bildes zu vermessen, ohne dass hierzu der seitliche und vertikale Abstand der Kamera vom Brennelementkasten sowie der Winkel zwischen der idealen Mittellängsachse des Brennelementes und der optischen Achse der Kamera bekannt sein müssen.

Unter dem Begriff "ideale Mittellängsachse" ist im Folgenden eine Verbindungsgerade zu verstehen, die die Mittelpunkte der an derselben Seitenwand befindlichen (oberen und unteren) stirnseitigen Kanten des Brennelementkastens verbindet.

Unter Bildweite der Kamera wird der Abstand zwischen dem Mittelpunkt einer gedachten dünnen Linse und der Bildebene bezeichnet, die denselben Abbildungsmaßstab aufweist, wie das verwendete, in der Regel mehrlinsige Kameraobjektiv, wobei zusätzlich die unterschiedlichen Brechungsindizes des innerhalb des Kameragehäuses befindlichen Mediums (i.d.R. Luft) und des die Kamera umgebenden Wassers berücksichtigt sind.

Zwar ist es grundsätzlich bereits aus der US 2011/0182393 A1 bekannt, die Durchbiegung und Torsion eines Brennelementes eines Druckwasserreaktors mit einem photogrammetrischen Verfahren zu messen. Das dort erläuterte Verfahren ist jedoch nicht zum Messen der Durchbiegung eines Brennelementkastens geeignet, da dieser keine von außen sichtbare Strukturelemente enthält, denen eine exakte axiale Position zugeordnet werden kann. Bei dem aus dieser Druckschrift bekanntem Verfahren können nämlich allein durch die Position der im Bild sichtbaren Abstandhalter die jeweils im Bild gemessenen Abweichungen der Position eines Strukturelementes im Bereich dieser Abstandhalter von einer idealen, sich in eine Längsrichtung des Brennelementes erstreckenden Geraden einer axialen Position zugeordnet werden. Bei einem Brennelement, dessen Brennstäbe von einem Brennelementkasten umgeben sind, oder bei einem nicht bestückten Brennelementkasten können die zur Messung der Abweichung jeweils ausgewählten horizontalen Ebenen nicht ohne weiteres einer tatsächlichen axialen Position zugeordnet werden.

FR-2 754 892 A1 offenbart ein Verfahren zum messen der Durchbiegung eines Brennelementes eines Druckwasserreaktors.

Der Erfindung liegt nun die Idee zugrunde, dass es auch ohne das Vorhandensein von hinsichtlich ihrer axialen Position bekannten und im Bild segmentierbaren Strukturelementen und ohne exakte Kenntnis der Relativposition zwischen Kamera und quaderförmigen Brennelementkasten möglich ist, unter Zuhilfenahme einfacher Grundgleichungen der geometrischen Optik allein aus der bekannten Länge und Breite des Brennelementkastens, den Bildpositionen der Eckpunkte der stirnseitigen Kanten und dementsprechend der Bildbreite der stirnseitigen Kanten und der bekannten Bildweite der Kamera zu jeder senkrecht zur idealen Mittellängsachse verlaufenden Schnittlinie bzw. Schnittebene durch Messung der Breite des abgebildeten Brennelementkastens der der Kamera zugewandten Seitenfläche in dieser Schnittebene deren axiale Position zu ermitteln. Hierzu wird entweder die Lage einer Schnittlinie im Bild berechnet, in der eine zur idealen Mittellängsachse senkrechte und hinsichtlich ihrer axialen Position vorgegebene Zwischenebene die der Kamera zugewandte Flachseite des Brennelementkastens schneidet, oder es wird aus der Lage einer vorgegebenen Schnittlinie im Bild deren tatsächlich axiale Position berechnet. Dementsprechend kann aus den Positionen der auf dieser Schnittlinie liegenden Eckpunkte im Bild ermittelt werden, in welcher axialen Position welche Abweichung der realen Mittellängsachse von der idealen Mittellängsachse vorliegt.

Um eine möglichst vollständige Aussage über den Verlauf der Verbiegung des Brennelementkastens über die gesamte Länge des Brennelementkastens zu erhalten, wird vorzugsweise die Bildposition des Mittelpunktes für eine Vielzahl von Zwischenebenen gemessen und der Verlauf einer die Mittelpunkte verbindenden Mittellinie sowie deren Abweichung von der idealen Mittellängsachse berechnet.

Eine Vermessung des Brennelementkastens ist einerseits möglich, wenn dieser leer ist, d.h. nachdem aus ihm die die Brennstäbe fixierende Haltestruktur entfernt ist. Andererseits kann der Brennelementkasten auch am kompletten Brennelement vermessen werden. Im letzteren Fall wird eine besonders einfache Verfahrensführung dann erzielt, wenn das Brennelement bei der Durchführung des Verfahrens frei hängend im Becken positioniert wird, da es in diesem Fall von der zum Transport des Brennelementes in die Messstation verwendeten Lademaschine nicht abgekoppelt werden muss.

Zur weiteren Erläuterung der Erfindung wird auf das in den Figuren dargestellte Ausführungsbeispiel verwiesen. Es zeigen:
Fig. 1 ein Prinzipbild, in dem die Anordnung der Kamera und des Brennelementes bei der Durchführung der erfindungsgemäßen photogrammetrischen Vermessung in einer Seitenansicht dargestellt sind,
Fig. 2 eine Draufsicht auf die der Kamera abgewandte Rückseite eines durchgebogenen Brennelementes ebenfalls in einem schematischen Prinzipbild,
Fig. 3 ein mit der Kamera aufgenommenes Bild des Brennelementkastens ebenfalls in einer vereinfachten Darstellung.

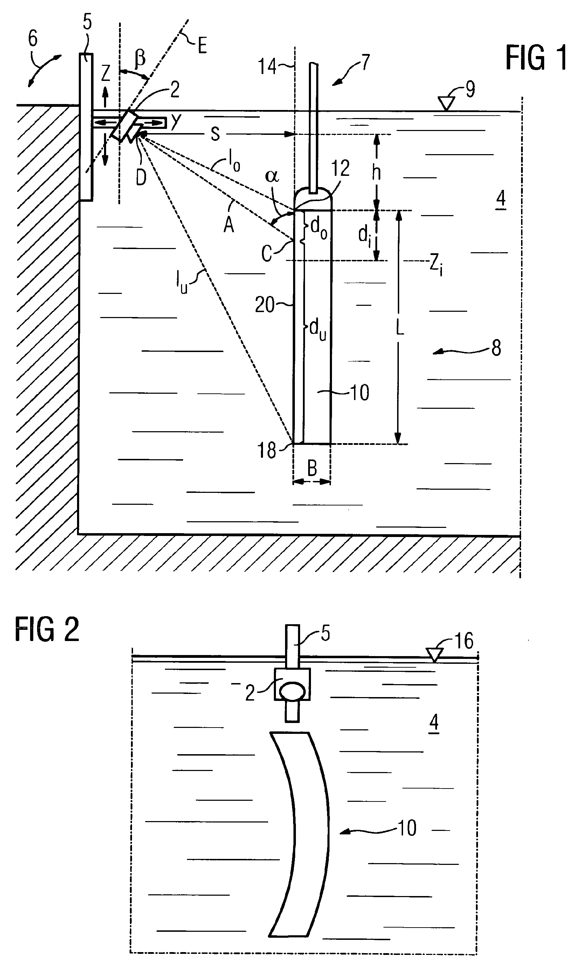

Gemäß Fig. 1 ist eine zur photogrammetrischen Vermessung des Brennelementkastens vorgesehene Kamera 2 an einem am Rand eines gefluteten Beckens 4 angeordneten Gestell 5 horizontal (x-Achse) und vertikal (z-Achse) verschiebbar und um eine senkrecht zur Zeichenebene und senkrecht zur x- und z-Achse verlaufende Achse schwenkbar gelagert, wie dies durch einen Doppelpfeil 6 veranschaulicht ist. Die Bildebene E der Kamera 2 verläuft senkrecht zur Zeichenebene, so dass der Winkel β zwischen der z-Achse und Bildebene E in der von der x- und der z-Achse aufgespannten (Zeichen-)Ebene verändert werden kann.

Im Bildfeld der Kamera 2 ist freihängend am Greifer einer Brennelementlademaschine 7 ein Brennelement 8 eines Siedewasserkernreaktors positioniert, das in der Figur vereinfacht nur in Gestalt des die Brennstäbe umgebenden Brennelementkastens 10 veranschaulicht ist. Das Becken 4 ist geflutet, so dass sich Kamera 2 und Brennelement 8 unterhalb der Wasseroberfläche 9 befinden.

Die Kamera 2 befindet sich in einem Abstand s und in einer Höhe h seitlich versetzt zu der bzw. oberhalb der der Kamera 2 zugewandten oberen stirnseitige Kante 12 des Brennelementes 8 bzw. Brennelementkastens 10. Die Abstands- bzw. Höhenangaben beziehen sich dabei auf den Punkt, in dem die optische Achse A der Kamera 2 die äußere Oberfläche des Objektivlinsensystems schneidet. Kamera 2 und Brennelement 8 bzw. Brennelementkasten 10 sind dabei so relativ zueinander positioniert, dass die optische Achse A der Kamera 2 unter einem spitzen Winkel α zu einer idealen Mittellängsachse 14 des Brennelementes 8 verläuft. Mit anderen Worten: Die Kamera 2 ist seitlich versetzt zum Brennelementkasten, d.h. von der Mittellängsachse 14 beabstandet angeordnet. Das Brennelement 8 bzw. der Brennelementkasten 10 wird so ausgerichtet, dass die Bildebene E der Kamera 2 parallel zur stirnseitigen Kante 12 des Brennelementkastens 10 orientiert ist. Vorzugsweise ist das Brennelement 8 außerdem so positioniert, dass die Eckpunkte der stirnseitigen Kante 12 im Bild etwa denselben Abstand zum seitlichen Bildrand aufweisen, so dass eine die Bildpositionen der Mittelpunkte der stirnseitigen oberen Kante 12 sowie der unteren stirnseitigen Kante 18 verbindende ideale Mittellängsachse 14 durch die Bildmitte verläuft. Kamera 2 und Brennelement 8 sind außerdem so relativ zueinander positioniert, dass im von der Kamera 2 aufgenommenen Bild sowohl die obere als auch die untere stirnseitige Kante 12 bzw. 18 abgebildet sind.

Aus der bekannten Bildweite der Kamera 2 sowie der bekannten Länge L und Breite B des Brennelementkastens 10 kann nun ohne Kenntnis des Winkels β, des seitlichen Abstandes s sowie des Höhenabstandes h eine Durchbiegung des Brennelementes in einer zur Zeichenebene senkrechten Ebene allein aus dem Verlauf der der Kamera 2 zugewandten seitlichen Längskanten 20 des Brennelementkastens 10 durch Anwendung einfacher trigonometrischer Formeln ermittelt werden.

Die optische Achse A der Kamera 2 schneidet die von den stirnseitigen Kanten 12, 18 aufgespannte, senkrecht zur Zeichenebene orientierte Ebene, die auch bei nach hinten (in Figur 1 nach rechts) gebogenem Brennelementkasten hinreichend genau mit der der Kamera 2 zugewandten Seitenfläche des Brennelementkastens 10 übereinstimmt, in einem Punkt C. Dieser befindet sich in einem Abstand dₒ bzw. dᵤ von den stirnseitigen Kanten 12 bzw. 18. Mit lₒ bzw. lᵤ sind die Abstände der stirnseitigen Kanten 12 bzw. 18 von einem Punkt D bezeichnet, in dem die optische Achse A die Mitte der vereinfacht als dünne Linse betrachteten Objektivlinse der Kamera 2 schneidet.

In Figur 1 ist außerdem eine senkrecht zur Mittellängsachse und zur Zeichenebene verlaufende Schnittebene Zᵢ eingezeichnet, die sich in einem Abstand dᵢ von der oberen Stirnkante des Brennelementkastens 10 befindet.

Figur 2 zeigt die in Figur 1 dargestellte Anordnung in einer Draufsicht auf die von der Kamera 2 abgewandte Rückseite des Brennelementkastens 10, wobei aus Gründen der Übersichtlichkeit der Greifer der Brennelementlademaschine nicht dargestellt ist. Ebenso ist die seitliche Durchbiegung des Brennelementkastens 10 übertrieben dargestellt.

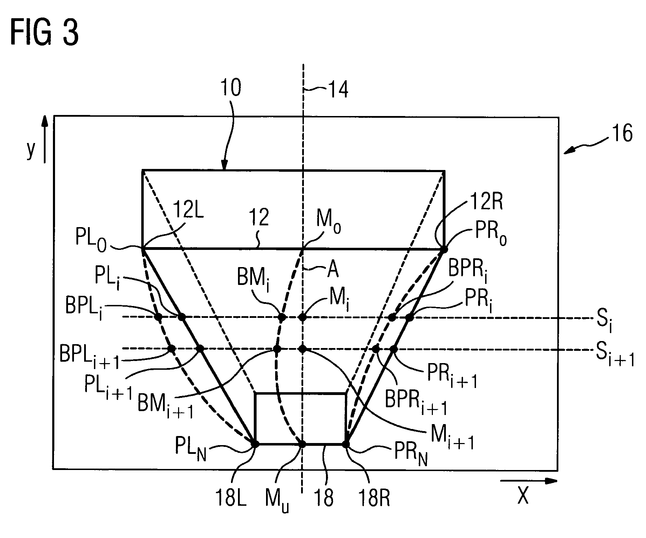

Anhand von Figur 3 wird die Vorgehensweise bei der Messung der Durchbiegung näher erläutert. Im Bildfeld 16 der Kamera ist der Brennelementkasten 10 perspektivisch abgebildet, wobei zu erkennen ist, dass sowohl die obere Stirnkante 12 als auch die untere Stirnkante 18 parallel zur X-Achse eines vom Bildfeld 16 der Kamera aufgespannten XY-Koordinatensystems verlaufen. Durch die spitzwinklige schräge Orientierung der optischen Achse A der Kamera relativ zur idealen Mittellängsachse 14 ist die untere Stirnkante 18 signifikant kürzer als die obere Stirnkante 12. Kamera und Brennelementkasten 10 sind darüber hinaus derart ausgerichtet, dass der Bildmittelpunkt, d.h. der Punkt in dem die optische Achse A die Bildebene schneidet auf der idealen Mittellängsachse 14 liegt. Diese Mittellängsachse 14 ist im Bild durch die Verbindungslinie zwischen den Mittelpunkten Mₒ, Mᵤ der abgebildeten stirnseitigen Kanten 12, 18 festgelegt.

Anhand der bekannten Abmessungen L,B des Brennelementkastens 10, der bekannten Bildweite b der Kamera werden aus den Bildpositionen PL₀, PR₀, PL_{N} und PR_{N} der stirnseitigen Eckpunkte 12R, 12L, 18L und 18R die Abstände dₒ, dᵤ und die Abstände lₒ, lᵤ (Fig. 1) berechnet, so dass die Position und Ausrichtung der Kamera relativ zum Brennelementkasten 10 und dementsprechend die geometrischen Abbildungsverhältnisse bekannt sind. Aus den Bildkoordinaten jedes Bildpunktes auf der der Kamera zugewandten Seitenfläche des Brennelementkastens 10 kann dann die Lage des diesem Bildpunkt in der von der der Kamera zugewandten Seitenfläche des Brennelementkastens 10 aufgespannten Ebene zugehörigen Objektpunktes berechnet werden.

In einem nächsten Schritt werden nun mehrere Zwischenebenen Zᵢ am realen Brennelementkasten ausgewählt, deren Abstand dᵢ (Fig.1) zur oberen Stirnkante 12 jeweils bekannt ist. Mit Hilfe der nunmehr bekannten Abbildungseigenschaften der Kamera werden für diese ausgewählten Zwischenebenen Zᵢ Schnittlinien Sᵢ in das vom Brennelementkasten 10 aufgenommene Bild eingeblendet, die sich ergeben würden, wenn die Zwischenebenen Zᵢ eine zur Kamera hin ebene Seitenfläche des Brennelementkastens 10 schneiden. Anschließend werden die Bildpositionen PLᵢ und PRᵢ der Eckpunkte gemessen, an denen die Schnittlinie Sᵢ im Bild die abgebildeten Längskanten des Brennelementkastens 10 schneidet. Deren Bildpositionen stimmen auch bei einem von der Kamera aus betrachtet konvex oder konkav gebogenen Brennelementkasten 10 mit hinreichender Genauigkeit mit den Bildpositionen der in diesen Zwischenebenen Zᵢ, tatsächlich befindlichen Eckpunkte überein.

Dies erfolgt für eine Mehrzahl von Zwischenebenen Zᵢ bzw. Schnittlinien Sᵢ wobei in der Figur aus Gründen der Übersichtlichkeit nur eine weitere Zwischenebene Zᵢ₊₁ sowie die zugehörigen Bildpositionen PLᵢ₊₁ und PRᵢ₊₁ der Eckpunkte eingeblendet sind. Anschließend wird die Bildposition Mᵢ des zwischen den Bildpositionen PLᵢ und PRᵢ der Eckpunkte liegenden Mittelpunktes für jede Zwischenebene Zᵢ berechnet. Im Falle eines nicht durchgebogenen Brennelementkastens 10 liegen diese Mittelpunkte alle auf der idealen Mittellängsachse 14.

Alternativ zu der vorstehend geschilderten Vorgehensweise kann auch zuerst eine parallel zu den stirnseitigen Kanten 12, 18 verlaufende Schnittlinie Sᵢ in das Bild eingeblendet werden, für die nachträglich deren tatsächliche axiale Position (Abstand dᵢ) ermittelt wird. Wesentlich ist, dass die tatsächliche axiale Position der Schnittlinie Sᵢ bekannt ist.

In der Figur 3 sind nun die Längskanten 20 eines gebogenen Brennelementkastens 10 gestrichelt eingezeichnet. In diesem Fall sind die Bildpositionen BPLᵢ und BPRᵢ der Eckpunkte nach links verschoben. Entsprechend verschiebt sich auch die Bildposition BMᵢ des Mittelpunktes der durch diese Eckpunkte BPLᵢ und BPRᵢ definierten Strecke nach links. Wird dies für eine Vielzahl von Zwischenebenen Zᵢ bzw. Schnittlinien Sᵢ durchgeführt, kann auf diese Weise aufgrund der bekannten Abbildungsverhältnisse der Verlauf der realen Mittellängsachse 14 aus den gemessenen Bildpositionen BMᵢ, BMᵢ₊₁ dieser Mittelpunkte berechnet werden.

## Patentansprüche

1. Verfahren zum Messen der Durchbiegung eines Brennelementkastens (20) für ein Brennelement (8) eines Siedewasserreaktors, bei dem mit einer Kamera (2) ein Bild des Brennelementkastens (10) aufgenommen und photogrammetrisch ausgewertet wird, mit den folgenden Verfahrensschritten:
a) Der Brennelementkasten (10) wird in einem gefluteten Becken positioniert,
b) die Kamera (2) wird derart parallel zu einer vertikalen Z-Achse in einer Höhe (h) oberhalb des Brennelementkastens (10) und seitlich versetzt zum Brennelementkasten (10) positioniert, dass
b1) deren optische Achse (A) unter einem spitzen Winkel (α) zu einer idealen Mittellängsachse (14) des Brennelementkastens (10), und dass
b2) deren Bildebene (E) parallel zu zwei parallel zu einer horizontalen X-Achse verlaufenden stirnseitigen Kanten (12, 18) des Brennelementkastens (10) orientiert ist, und dass
b3) beide der Kamera (2) zugewandten stirnseitigen Kanten (12,18) des Brennelementkastens (10) im Bild abgebildet sind,
c) in dem von der Kamera (2) aufgenommenen Bild werden die Bildpositionen (PL₀, PR₀, PL_{N} und PR_{N}) der Eckpunkte (12R, 12L, 18R und 18L )der parallel zur Bildebene (E) orientierten, der Kamera (2) zugewandten stirnseitigen Kanten (12, 18) gemessen,
d) aus der bekannten Länge (L) und Breite (B) des Brennelementkastens (10), den Bildpositionen (PL₀, PR₀, PL_{N} und PR_{N}) der Eckpunkte der stirnseitigen Kanten und der bekannten Bildweite der Kamera (2) wird entweder die Lage einer Schnittlinie (Sᵢ) im Bild berechnet, in der eine zur idealen Mittellängsachse (14) senkrechte und hinsichtlich ihrer axialen Position vorgegebene Zwischenebene die der Kamera (2) zugewandte Seitenfläche des Brennelementkastens (10) schneidet, oder es wird aus der Lage einer vorgegebenen Schnittlinie (Sᵢ) im Bild die axiale Position dieser Schnittlinie (Sᵢ) berechnet,
e) die Schnittlinie (Sᵢ) wird in das Bild eingeblendet und es werden die Bildpositionen (PLᵢ, PRᵢ₊, BPLᵢ, BPRᵢ) der auf dieser Schnittlinie (Sᵢ) liegenden Eckpunkte des Brennelementkastens (10) gemessen,
f) aus den Bildpositionen (PLᵢ, PRᵢ₊, BPLᵢ, BPRᵢ) der Eckpunkte wird die Bildposition (Mᵢ, BMᵢ) des Mittelpunktes einer die Eckpunkte verbindenden, parallel zu den stirnseitigen Kanten verlaufenden Strecke ermittelt,
g) mit Hilfe der bekannten Breite (B) des Brennelementkastens (10) und des in dieser Schnittlinie (Sᵢ) bekannten Abbildungsmaßstabes der Kamera (2) wird aus der gemessenen Bildposition (Mᵢ, BMᵢ) dieses Mittelpunktes dessen Abweichung von der idealen Mittellängsachse (14) berechnet.

2. Verfahren nach Anspruch 1, bei dem die Bildposition des Mittelpunktes für eine Vielzahl von Zwischenebenen gemessen und der Verlauf einer die Mittelpunkte verbindenden Mittellinie sowie deren Abweichung von der idealen Mittellängsachse berechnet wird.

3. Verfahren nach Anspruch 1 oder 2, bei dem zum Messen der Durchbiegung des Brennelementkastens ein Brennelement frei hängend im Becken positioniert wird.

## Claims

1. Method for measuring the deflection of a fuel element channel (20) for a fuel element (8) of a boiling water reactor, in which an image of the fuel element channel (10) is taken using a camera (2) and is evaluated photogrammetrically, having the following method steps:
a) the fuel element channel (10) is positioned in a flooded pool,
b) the camera (2) is positioned in parallel to a vertical Z axis at a height (h) above the fuel element channel (10) and laterally offset to the fuel element channel (10) in such a way that
b1) the optical axis (A) thereof is orientated at an acute angle (α) to an ideal central longitudinal axis (14) of the fuel element channel (10), and that
b2) the image plane (E) thereof is orientated in parallel to two front-side edges (12, 18) of the fuel element channel (10) running in parallel to a horizontal X-axis, and that
b3) both of the front-side edges (12, 18) of the fuel element channel (10) facing towards the camera (2) are displayed in the image,
c) the image positions (PL₀, PR₀, PL_{N} and PR_{N}) of the corner points (12R, 12L, 18R and 18L) of the front-side edges (12, 18) which are orientated in parallel to the image plane (E) and which face towards the camera (2) are measured in the image taken by the camera (2),
d) either the position of an intersecting line (Sᵢ) in the image, in which an intermediate plane, which is perpendicular to the ideal central longitudinal axis (14) and is predetermined with regard to its axial position, cuts the side surface of the fuel element channel (10) facing towards the camera (2), is calculated from the known length (L) and width (B) of the fuel element channel (10), the image positions (PL₀, PR₀, PL_{N} and PR_{N}) of the corner points of the front-side edges and the known image width of the camera (2), or the axial position of this intersecting line (Sᵢ) is calculated from the position of a predetermined intersecting line (Sᵢ) in the image,
e) the intersecting line (Sᵢ) is merged into the image and the image positions (PLᵢ, PRᵢ₊, BPLᵢ and BPRᵢ) of the corner points of the fuel element channel (10) lying on this intersecting line (Sᵢ) are measured,
f) the image position (Mᵢ, BMᵢ) of the central point of a stretch which connects the corner points and runs in parallel to the front-side edges is determined from the image positions (PLᵢ, PRᵢ₊, BPLᵢ and BPRᵢ),
g) with the aid of the known width (B) of the fuel element channel (10) and of the magnification of the camera (2) known in this intersecting line (Sᵢ), the deviation of this central point from the ideal central longitudinal axis (14) is calculated from the measured image position (Mᵢ, BMᵢ) thereof.

2. Method according to claim 1, in which the image position of the central point is measured for a plurality of intermediate planes and the course of a central line connecting the central points as well as the deviation thereof from the ideal central longitudinal axis is calculated.

3. Method according to claim 1 or 2, in which a fuel element is positioned to be freely hanging in the pool to measure the deflection of the fuel element channel.

## Revendications

1. Procédé de mesure de la flexion d'une gaine d'élément combustible (10) pour un élément combustible (8) d'un réacteur à eau bouillante, dans lequel on enregistre avec une caméra (2) une image de la gaine d'élément combustible (10) et on l'exploite par photogrammétrie, comprenant les étapes suivantes :
(a) on positionne la gaine d'élément combustible (10) dans un bassin noyé ;
(b) on positionne la caméra (2) parallèlement à un axe vertical Z à une hauteur (h) au-dessus de la gaine d'élément combustible (10) et de façon décalée latéralement par rapport à la gaine d'élément combustible (10), de telle manière que :
(b1) son axe optique (A) soit orienté avec un angle aigu (α) par rapport à un axe central longitudinal idéal (14) de la gaine d'élément combustible (10), et que ;
(b2) son plan d'image (E) soit orienté parallèlement à deux bords frontaux (12, 18) de la gaine d'élément combustible (10) s'étendant parallèlement à un axe horizontal X, et que ;
(b3) les deux bords frontaux (12, 18) de la gaine d'élément combustible (10) tournés vers la caméra (2) soient reproduits dans l'image ;
(c) dans l'image enregistrée par la caméra (2), on mesure les positions d'image (PL₀, PR₀, PL_{N} et PR_{N}) des coins (12R, 12L, 18R et 18N) des bords frontaux (12, 18) orientés parallèlement au plan d'image (E) et tournés vers la caméra (2) ;
(d) à partir de la longueur (L) et de la largeur (B) connues de la gaine d'élément combustible (10), des positions d'image (PL₀, PR₀, PL_{N} et PR_{N}) des coins des bords frontaux et de la distance d'image connue de la caméra (2), soit on calcule la position d'une ligne d'intersection (Sᵢ) dans l'image, dans laquelle un plan intermédiaire perpendiculaire à l'axe central longitudinal idéal (14) et prédéterminé quant à sa position axiale coupe la face latérale de la gaine d'élément combustible (10) tournée vers la caméra (2), soit on calcule à partir de la position d'une ligne d'intersection prédéterminée (Sᵢ) dans l'image la position axiale de cette ligne d'intersection (Sᵢ),
(e) on affiche la ligne d'intersection (Sᵢ) dans l'image et on mesure les positions d'image (PLᵢ, PRᵢ₊, BPLᵢ, BPRᵢ) des coins de la gaine d'élément combustible (10) situés sur cette ligne d'intersection (Sᵢ),
(f) à partir des positions d'image (PLᵢ, PRᵢ₊, BPLᵢ, BPRᵢ) des coins, on détermine la position d'image (Mᵢ, BMᵢ) du point médian d'un segment reliant les coins et s'étendant parallèlement aux bords frontaux,
(g) à l'aide de la largeur connue (B) de la gaine d'élément combustible (10) et de l'échelle de reproduction de la caméra connue dans cette ligne d'intersection (Si), on calcule à partir de la position d'image mesurée (Mᵢ, BMᵢ) de ce point médian l'écart de ce dernier par rapport à l'axe central longitudinal idéal (14).

2. Procédé selon la revendication 1, dans lequel on mesure la position d'image du point médian pour une multiplicité de plans intermédiaires et on calcule l'allure d'une ligne médiane reliant les points médians ainsi que son écart par rapport à l'axe central longitudinal idéal.

3. Procédé selon la revendication 1 ou 2, dans lequel, pour mesurer la flexion de la gaine d'élément combustible, on positionne un élément combustible en suspension libre dans le bassin.
